# EUROPÄISCHE PATENTSCHRIFT

(11) **EP 0 539 671 B1**
(45) Veröffentlichungstag und Bekanntmachung des Hinweises auf die Patenterteilung: **12.04.1995**
(21) Anmeldenummer: 92113731.1
(22) Anmeldetag: 12.08.1992
(51) Int. Cl.: B29D 31/00, B29C 69/00, B23Q 3/08

(54) **Verfahren zum Bearbeiten eines mit Mikrovertiefungen versehenen Kunststoff-Halbzeugs**
Process for the production of a plastic preform with pores
Procédé pour la fabrication d'une préforme poreuse

(30) Priorität: 30.10.1991 DE 4135676
(43) Veröffentlichungstag der Anmeldung: 05.05.1993
(73) Patentinhaber: Forschungszentrum Karlsruhe GmbH, 76133 Karlsruhe (DE)
(72) Erfinder: Bier, Wilhelm, Dr., W-7514 Egg.-Lepoldshafen (DE); Schaller, Thomas, W-7504 Weingarten (DE); Schubert, Klaus, Dr., W-7500 Karlsruhe 41 (DE)
(74) Vertreter: Gottlob, Peter, Dipl. Ing.

(56) Entgegenhaltungen:
- DE-A- 3 811 748
- FR-A- 2 115 539
- GB-A- 981 502
- US-A- 3 074 392

## Beschreibung

Die Erfindung betrifft ein Verfahren zum Bearbeiten eines auf einer Seite mit Mikrovertiefungen versehenen Kunststoff-Halbzeugs mit den Schritten:
a) Ausfüllen und Überdecken der Mikrovertiefungen mit einer selektiv durch Auflösen entfernbaren aushärtbaren Substanz,
b) Aushärten der Substanz,
c) Ebnen der Oberfläche der ausgehärteten Substanz durch spanende Bearbeitung,
d) Aufspannen der geebneten Seite auf eine Vakuumspannvorrichtung,
e) spanende Bearbeitung der nicht mit Mikrovertiefungen versehenen Seite des Kunststoff-Halbzeugs, bis die Mikrovertiefungen zumindest teilweise freigelegt sind,
f) selektives Entfernen der Substanz aus den Mikrovertiefungen.

Endprodukt des Verfahrens sind mit Mikroöffnungen versehene Kunststoffkörper. Das Endprodukt kann beispielsweise ein gitterförmiger, netzartig mikrostrukturierter Körper aus Kunststoff sein, wobei Form und Größe der Gitterstege und der Öffnungen in weiten Grenzen variieren können. Beispielsweise können die Gitterstege unterschiedliche Höhen und gegenüber der Gitterebene gerade oder geneigte Wände aufweisen. Die Öffnungen können z. B. eine runde, quadratische oder schlitzförmige Form annehmen. Endprodukt des Verfahrens sind aber auch Kunststoffkörper, bei denen die Öffnungen nicht periodisch wie z. B. in Gitter- oder Netzstrukturen angeordnet sind, sondern beispielsweise voneinander isolierte Gruppen bilden.

Unter dem Begriff "Mikrovertiefungen" sollen im folgenden aus dem Kunststoff-Halbzeug herausgearbeitete Negativ-Strukturen verstanden werden, deren Abmessungen im Bereich zwischen einigen Mikrometern und einigen hundert Mikrometern betragen.

Das erfindungsgemäße Verfahren geht von Kunststoff-Halbzeugen vorzugsweise von plattenartiger Form aus, bei denen auf einer Seite die die Gestalt des Endprodukts bestimmenden Mikrovertiefungen vorgeformt sind. Solche Halbzeuge können beispielsweise erhalten werden, wenn man mit Hilfe der mechanischen Mikrofertigung -etwa durch Bearbeiten mit einem Formdiamanten - oder der Röntgentiefenlithographie hergestellte metallische Werkzeuge in Kunststoff abformt. Für die Abformung wird meist Polymethylmethacrylat (PMMA) verwendet. Bei den bekannten Abformmethoden Spritzgießen oder Reaktionsgießen wird prozeßbedingt eine relativ dicke Bodenplatte unter den Mikrostrukturen gebildet.

In der DE 38 42 610 C1 ist die Herstellung von metallischen Folien oder Platten mit einer Vielzahl feiner Öffnungen oder Schlitze beschrieben. Hierbei wird ein an der Oberfläche mit Mikrostrukturen versehenes Werkzeug hergestellt. Die Mikrostrukturen des Werkzeugs werden mit einer Abformmasse abgeformt, wobei die Abformmasse aus einer elektrisch leitenden und einer elektrisch isolierenden Schicht besteht und die Mikrostrukturen des Werkzeugs durch die elektrisch isolierende Schicht hindurch bis in die elektrisch leitende Schicht eingeführt werden, worauf die so entstandene Form galvanisch unter Verwendung der elektrisch leitenden Schicht als Kathode mit einem Metall aufgefüllt und danach die Abformmasse entfernt wird.
Wenn das Werkzeug solche Mikrostrukturen aufweist, daß in der Abformmasse eng benachbarte, sich zur elektrisch leitenden Schicht hin verjüngende Mikrostrukturen abgeformt werden, kann die Größe der Öffnungen in den Folien oder Platten eingestellt werden, indem die Abformmasse entsprechend weit galvanisch aufgefüllt wird.
Nach diesem Verfahren können jedoch nur metallische mikrostrukturierte Körper erhalten werden.

Aus der DE 38 13 711 A1 ist ein Verfahren zum Fertigbearbeiten einer mit Rillen versehenen Oberfläche eines Gegenstands bekannt, das die folgenden Stufen umfaßt:
- Füllen einer Rille in der mit Rillen versehenen Oberfläche mit einem weichen, spröden Material und
- anschließendes Ausschneiden (Fräsen) der mit Rillen versehenen Oberfläche.
Das spröde Material kann ein wasserlösliches Material wie z. B. Stärke, Dextrin, eine Saccharoseverbindung, ein Carbonat oder ein Chlorid sein. Als sprödes Material ist jedoch auch ein sublimierbares Material, insbesondere Naphthalin, geeignet. Das Verfahren wird an metallischen Oberflächen angewandt.
Mit den wasserlöslichen Materialien, die als Pulver eingesetzt werden, ist es nicht möglich, Zwischenräume zwischen Mikrostrukturen hohlraumfrei zu befüllen, weil die Korngröße üblicher Pulver in der Größenordnung der Mikrostrukturen liegt. Die Verwendung von sublimierbaren Substanzen erfordert Temperaturen oberhalb von 80 °C, bei denen empfindliche Mikrostrukturen, etwa solche aus PMMA, bereits verformt werden können. Die Druckschrift gibt im übrigen keinen Hinweis darauf, wie die eingangs beschriebenen Endprodukte erhalten werden können.

Aus dem JP-Abstract 63-11 244 ist ein Verfahren bekannt, mit dessen Hilfe in einseitig verschlossene Werkstücke gratfreie Löcher gebohrt werden können. Hierzu wird das einseitig verschlossene Werkstück bei etwa 150 °C mit Polyurethanharz befüllt und nach dem Aushärten angebohrt. Das Polyurethanharz soll durch Auswaschen mit Wasser entfernt werden.
Dies kann - wegen der geringen Löslichkeit von ausgehärtetem Polyurethanharz in Wasser - offensichtlich nicht auf schonende, für Mikrostrukturen verträgliche Weise geschehen. Die Bearbeitung mikrostrukturierter Kunststoff-Halbzeuge wird nicht angesprochen.

In der DD 282 410 A5 ist ein Verfahren zum Entgraten von perforierten Teilen, insbesondere von Siebblechen, die gerade oder zu Zylindern gerundet sind, bekannt, bei dem die Löcher des perforierten Teiles vor der spanenden Bearbeitung mit einer spachtelfähigen aushärtbaren, nach der spanenden Bearbeitung leicht entfernbaren Masse gefüllt werden. Als aushärtbare Masse wird Polyurethanvergußmasse oder Gips verwendet.
Die Entfernung dieser Masse erfolgt mechanisch, etwa durch Druckwasser, oder chemisch, etwa durch temperierte Salzsäure. Das Verfahren ist deshalb nicht für mikrostrukturierte Körper aus Kunststoff geeignet.

Aus der DE-OS 28 12 719 ist ein Verfahren zur spangebenden Formung poröser Werkstücke bekannt, bei dem die Poren des Werkstoffs vor der spangebenden Bearbeitung mit einem Stoff gefüllt werden, der die Porenwände seitlich abstützt und damit das Verschließen der Poren durch seitlichen Druck oder Gratbildung erschwert oder verhindert. Die Art des Füllstoffs, seine Entfernung und die Art der Bearbeitung werden jedoch nicht angegeben.

Aus der DE 38 11 748 C2 ist ein Verfahren zur Herstellung von Mikrogittern, Mikrosieben etc. bekannt, bei dem ein plattenförmiger Körper beidseitig mikrostrukturiert wird. Während der Bearbeitung wird eine folienartige Stützschicht lösbar mit dem plattenförmigen Körper verklebt. Der Körper kann über die Stützschicht auf einer Vakuumspannvorrichtung gehalten werden. Nach der Bearbeitung des Körpers müssen somit sowohl die Stützschicht als auch der (nicht näher spezifizierte) Klebstoff entfernt werden.

Der Erfindung liegt die Aufgabe zugrunde, Strukturen mit Mikroöffnungen, z. B. Mikrogitter oder Mikronetze herzustellen, die im Gegensatz zu der eingangs genannten DE 38 42 610 C1 nicht aus Metall, sondern aus Kunststoff bestehen. Ähnlich wie bei dem in dieser Druckschrift beschriebenen Verfahren soll sich die Größe der Öffnungen im Endprodukt bei in besonderer Weise vorgeformten Mikrovertiefungen auf dem Kunststoff-Halbzeug in einem Arbeitsgang auf einen gewünschten Wert einstellen lassen. Das Verfahren soll in der Weise durchgeführt werden, daß sich das Kunststoff-Halbzeug während der Bearbeitung auf einer Vakuumspannvorrichtung fixieren läßt, obwohl das Endprodukt einen mit Öffnungen versehenen, z. B. gitterförmigen Mikrostrukturkörper darstellt. Bei der Durchführung des Verfahrens soll überdies gewährleistet sein, daß sich die filigranen Strukturen des Kunststoff-Halbzeugs nicht verformen oder beschädigt werden.

Die Aufgabe wird durch das im ersten Patentanspruch beschriebene Verfahren gelöst. Spezielle Ausgestaltungen und bevorzugte Ausführungsformen des erfindungsgemäßen Verfahrens sind in den abhängigen Ansprüchen beschrieben.

Aus den vorgeformten Mikrovertiefungen des Kunststoff-Halbzeugs werden beim erfindungsgemäßen Verfahren Mikroöffnungen im Endprodukt erzeugt.

Ein wesentlicher Vorzug des erfindungsgemäßen Verfahrens besteht darin, daß das Kunststoff-Halbzeug während der Bearbeitung auf einer Vakuumspannvorrichtung fixiert werden kann. Wesentlich für die Auswahl der aushärtbaren Substanz ist somit, daß die Vertiefungen blasenfrei und dicht ausgefüllt werden. Andernfalls kann das Kunststoff-Halbzeug nicht zuverlässig gehalten werden, denn während der Bearbeitung werden die Vertiefungen freigelegt. Wegen der hierbei entstehenden Öffnungen würde das angelegte Vakuum zusammenbrechen. Eine feste und zuverlässige Fixierung des Kunststoff-Halbzeugs wahrend der Bearbeitung ist eine unabdingbare Voraussetzung für die Qualität und Maßgenauigkeit der erzeugten Endprodukte. Ferner wird beim erfindungsgemäßen Verfahren verhindert, daß sich hohlliegende Mikrostrukturen des Kunststoff-Halbzeugs durchbiegen. Schließlich verhindert die aushärtbare Substanz, daß sich bei der spanenden Bearbeitung der nicht mit Mikrovertiefungen versehenen Seite des Kunststoff-Halbzeugs Grate bilden, die die Öffnungen, die durch Freilegen der Vertiefungen erzeugt werden, teilweise wieder verschließen.

Die Auswahl der aushärtbaren Substanz ist ferner von den Materialeigenschaften des Kunststoff-Halbzeugs und insbesondere von der Größe und Form der darauf abgeformten Mikrovertiefungen abhängig. Die aushärtbare Substanz wird-so gewählt, daß sie selektiv aus dem bearbeiteten Kunststoff-Halbzeug z. B. durch Auflösen entfernt werden kann. Sie soll daher vorzugsweise in einem Lösungsmittel, das das Kunststoff-Halbzeug nicht angreift, auch in ausgehärtetem Zustand leicht löslich sein. Für wärmebeständige Kunststoffe mit relativ groben, unempfindlichen Mikrovertiefungen sind auch die bekannten sublimierbaren Substanzen als aushärtbare Substanz verwendbar.

Im allgemeinen wird als Material zum Abformen von mikrostrukturierten Werkzeugen Polymethylmethacrylat (PMMA) eingesetzt. Mit Mikrostrukturen versehene Halbzeuge aus diesem Material sind jedoch sehr empfindlich und dürfen keiner Temperatur oberhalb von ca. 60 °C ausgesetzt werden. Bei der Abformung mit PMMA werden im Kunststoff Spannungen aufgebaut, die die Ursache für diese Empfindlichkeit sind. Wegen der Gefahr, daß sich das Halbzeug und damit die abgeformten Mikrostrukturen verziehen, scheidet selbst ein Temperschritt bei mäßigen Temperaturen zum Abbau der Spannungen aus. In diesem Fall müssen spezielle aushärtbare Substanzen eingesetzt werden. Solche Substanzen sind in der Gruppe der Leime zu finden. Leime sind aushärtbare Klebstoffe auf pflanzlicher oder tierischer Basis mit Wasser als Lösungsmittel. Besonders bevorzugt werden Leime auf tierischer Basis, die sogenannten Glutinleime. Leime können auch im ausgehärteten Zustand leicht mit Wasser entfernt werden.

Beste Ergebnisse werden mit Fischleim (hergestellt aus Fischhäuten) erzielt. Fischleim ist ein kommerziell erhältliches Produkt. Es kann bei Raumtemperatur verarbeitet werden, härtet schrumpfarm aus, ist gegen die meisten Kunststoffe, insbesondere auch gegenüber PMMA inert und haftet vorzüglich auf PMMA und anderen Kunststoffen. Schießlich ist ausgehärteter Fischleim leicht fräsbar und kann kunststoffverträglich mit kaltem Wasser ohne Anwendung von Druck wieder entfernt werden. Fischleim wird demgemäß als aushärtbare Substanz insbesondere dann besonders bevorzugt, wenn das Kunststoff-Halbzeug aus PMMA besteht.

Besonders bei sehr filigranen gitterförmigen Mikrostrukturen ist es mitunter schwierig, die Mikrovertiefungen blasenfrei mit der aushärtbaren Substanz zu befüllen. In diesem Fall werden die Mikrovertiefungen zuerst mit einem Lösungsmittel für die aushärtbare Substanz befüllt und die Substanz erst anschließend aufgebracht. Bei der Verwendung von Fischleim wird Wasser als Lösungsmittel bevorzugt.

Selbst sehr feine, von hohen Mikrostrukturen umgebene Mikrovertiefungen können blasenfrei mit Lösungsmittel und damit auch mit der aushärtbaren Substanz befüllt werden, wenn das Lösungsmittel auf die mikrostrukturierte Seite des Kunststoffhalbzeugs aufgedampft wird. Dabei kommt es in den Mikrovertiefungen zur Kondensation. Anschließend kann man eine Lösung der aushärtbaren Substanz in dem selben Lösungsmittel seitlich neben den Mikrostrukturen auf das Kunststoff-Halbzeug aufgeben und über den Mikrovertiefungen verlaufen lassen.

Ähnlich dem eingangs erwähnten Verfahren gemäß der DE 38 42 610 C2 kann die Größe der Öffnungen am Endprodukt des erfindungsgemäßen Verfahrens eingestellt werden, und zwar, wenn für die einzelnen Mikrovertiefungen des Kunststoff-Halbzeugs eine sich verjüngende Form, etwa eine Pyramide, ein Pyramidenstumpf, ein Kegel, ein Kegelstumpf oder eine Paraboloidform gewählt wird. In diesem Fall kann die spanende Bearbeitung der nicht mit Mikrostrukturen versehenen Seite des Kunststoff-Halbzeugs so lange fortgesetzt werden, bis die Querschnitte (parallel zur Ebene des Kunststoff-Halbzeugs) der Mikrovertiefungen die vorbestimmte Größe aufweisen.

Die durch die spanende Bearbeitung freigelegte Fläche des Kunststoff-Halbzeugs muß dabei nicht unbedingt eine Ebene darstellen. Bilden die sich verjüngenden Vertiefungen des Kunststoff-Halbzeugs eine gitterartige Struktur aus, so kann durch eine nicht ebene spanende Bearbeitung im Endprodukt eine Größenverteilung der Öffnungen erreicht werden. Nimmt z. B. die durch die spanende Bearbeitung freigelegte Fläche eine nach innen vertiefte Form (etwa in Form einer Kugelkalotte) an, so enthält das Endprodukt im Zentrum größere Öffnungen als in den Randbereichen.

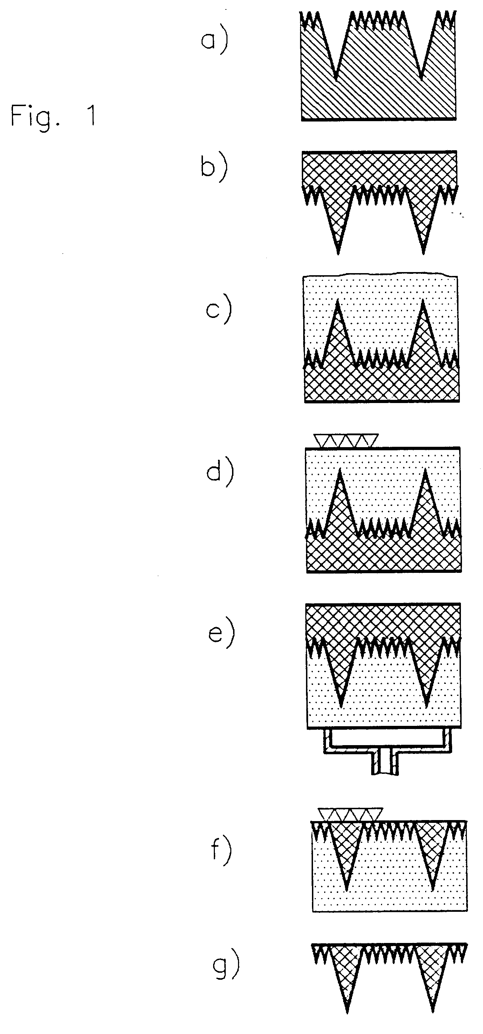

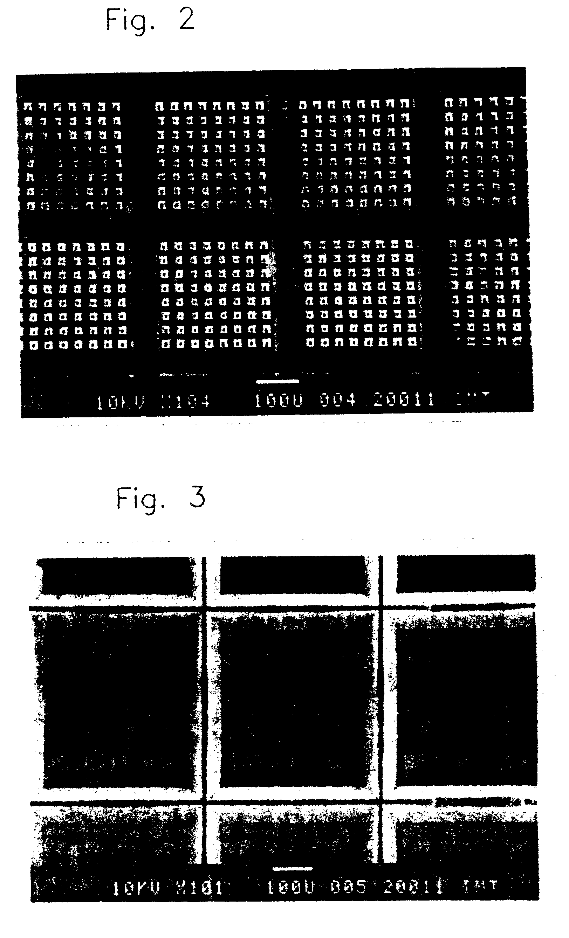

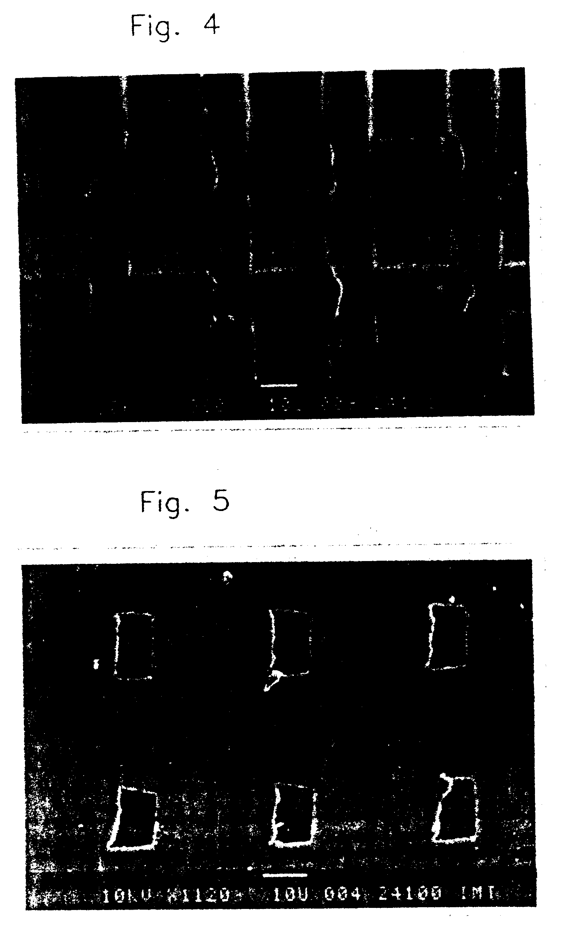

Die Erfindung wird anhand der Figuren näher erläutert. Fig. 1 gibt den Ablauf des erfindungsgemäßen Verfahrens an. In den Fig. 2 bis 5 sind das mikrostrukturierte Werkzeug, das abgeformte Kunststoff-Halbzeug und das Endprodukt dargestellt.

Das Verfahren geht von einem mikrostrukturierten Werkzeug aus Metall aus, das z. B. durch kreuzweises Bearbeiten mit einem Formdiamanten mit groben und feinen gitterförmigen Vertiefungen versehen wurde. Das Werkzeug ist in Fig. 1, Teil a schematisch dargestellt. Fig. 2 stellt eine Rasterelektronenmikroskopaufnahme (REM) dieses Werkzeugs dar.

In Fig. 1, Teil b und Fig. 3 ist das abgeformte Kunststoff-Halbzeug mit der gitterförmigen Mikrostruktur bestehend aus groben und feinen Stegen dargestellt.

Fig. 1, Teil c zeigt das Kunststoff-Halbzeug, bei dem die Vertiefungen mit der aushärtbaren Substanz ausgefüllt und überschichtet sind. Wie in Teil d von Fig. 1 dargestellt, wird die aushärtbare Substanz nach der Aushärtung plangefräst; das Kunststoff-Halbzeug wird mit der plangefrästen Seite auf einer Vakuumspannvorrichtung (Fig. 1, Teil e) fixiert. Gemäß Teil f von Fig. 1 werden die Gitterstege und Vertiefungen der Mikrostruktur durch Überfräsen freigelegt, wobei die Vertiefungen den Öffnungen des Endprodukts entsprechen. Das Endprodukt ist in Teil g von Fig. 1 schematisch sowie in den Fig. 4 und 5 von beiden Seiten in einer REM-Aufnahme dargestellt.

### Ausführungsbeispiel:

Zuerst wird ein Werkzeug hergestellt, in das die Mikrostrukturen eingebracht werden. Im Beispiel beschränkt sich die Mikrostrukturierung auf die Profilierung von erhabenen Plateaus aus Metall von 10 · 10 mm², mit denen das Werkzeug vorstrukturiert wurde.
In jedes Plateau werden mit einem keilförmig profilierten Diamanten kreuzweise Nuten derart eingebracht, daß im Rastermaß 400 »m quadratische Netze aus 280 »m tiefen Gräben mit dreieckigem Querschnitt entstehen. Dadurch bleiben Pyramidenstümpfe mit Deckflächen von 300 · 300 »m² stehen.

In die Pyramidenstümpfe wird anschließend durch erneute kreuzweise Bearbeitung eine Substruktur eingebracht: Die Deckfläche eines jeden Pyramidenstumpfs wird im Raster 40 »m durch 8 · 8 Mikropyramidenstümpfe strukturiert. Die Höhe der Mikropyramidenstümpfe liegt bei 80 »m, die Deckflächen messen einige 10 »m².

Dieses Werkzeug wird nun mit einer Spritzgießmaschine in PMMA abgeformt. Die Mikrostrukturen des abgeformten Halbzeugs werden mit Fischleim befüllt und überdeckt, der nach dem Aushärten plangefräst wird. Zur Nachbearbeitung wird das PMMA-Halbzeug auf einer Vakuumspannvorrichtung fixiert und das überstehende PMMA mit einer Ultrafräse entfernt, bis die Poren des Bodens in gewünschter Größe offen zutage treten. Über das Maß des Abtrags läßt sich die Dicke des "Bodens" bzw. der minimale Porendurchmesser steuern. Durch vollständiges Entfernen des "Bodens" erhält man ein Kunststoffnetz aus 100 »m breiten Stegen mit Maschenweiten von 300 »m.

## Patentansprüche

1. Verfahren zum Bearbeiten eines auf einer Seite mit Mikrovertiefungen versehenen Kunststoff-Halbzeugs mit den Schritten:
a) Ausfüllen und Überdecken der Mikrovertiefungen mit einer selektiv durch Auflösen entfernbaren aushärtbaren Substanz,
b) Aushärten der Substanz,
c) Ebnen der Oberfläche der ausgehärteten Substanz durch spanende Bearbeitung,
d) Aufspannen der geebneten Seite auf eine Vakuumspannvorrichtung,
e) spanende Bearbeitung der nicht mit Mikrovertiefungen versehenen Seite des Kunststoff-Halbzeugs, bis die Mikrovertiefungen zumindest teilweise freigelegt sind,
f) selektives Entfernen der Substanz aus den Mikrovertiefungen.

2. Verfahren nach Anspruch 1, dadurch gekennzeichnet, daß das Kunststoff-Halbzeug aus Polymethylmethacrylat (PMMA) besteht.

3. Verfahren nach Anspruch 1 oder 2, dadurch gekennzeichnet, daß die aushärtbare Substanz aus einem Leim besteht.

4. Verfahren nach Anspruch 3, dadurch gekennzeichnet, daß als Leim Fischleim eingesetzt wird.

5. Verfahren nach Anspruch 3 oder 4, dadurch gekennzeichnet, daß das selektive Entfernen durch Herauslösen mit Wasser erfolgt.

6. Verfahren nach Anspruch 1, 2, 3 oder 4, dadurch gekennzeichnet, daß zum Ausfüllen und Überdecken der Mikrovertiefungen mit der aushärtbaren Substanz die Mikrovertiefungen mit einem Lösungsmittel für die Substanz befüllt werden und danach die Substanz aufgebracht wird.

7. Verfahren nach Anspruch 6, dadurch gekennzeichnet, daß das Befüllen der Mikrovertiefungen durch Bedampfen mit dem Lösungsmittel erfolgt.

8. Verfahren nach Anspruch 1, dadurch gekennzeichnet, daß sich die Mikrovertiefungen mit zunehmender Tiefe verjüngen.

9. Verfahren nach Anspruch 8, dadurch gekennzeichnet, daß die spanende Bearbeitung der nicht mit Mikrovertiefungen versehenen Seite des Kunststoff-Halbzeugs so lange fortgesetzt wird, bis die Querschnitte der Mikrovertiefungen eine vorbestimmte Größe aufweisen.

## Claims

1. Method of processing a plastics material semifinished product, which is provided with microindentations on one side, having the following steps:
a) filling and covering the microindentations with an age-hardenable substance, which can be selectively removed by dissolution;
b) age-hardening the substance;
c) smoothening the surface of the age-hardened substance by machining;
d) clamping the smoothened side onto a vacuum clamping device;
e) machining the side of the plastics material semifinished product, which is not provided with microindentations, until the microindentations are at least partially exposed;
f) selectively removing the substance from the microindentations.

2. Method according to claim 1, characterised in that the plastics material semifinished product is formed from polymethyl methacrylate (PMMA).

3. Method according to claim 1 or 2, characterised in that the age-hardenable substance is formed from a glue.

4. Method according to claim 3, characterised in that fish glue is used as the glue.

5. Method according to claim 3 or 4, characterised in that the selective removal is effected by dissolving in water.

6. Method according to claim 1, 2, 3 or 4, characterised in that, to fill and cover the microindentations with the age-hardenable substance, the microindentations are filled with a solvent for the substance, and then the substance is applied.

7. Method according to claim 6, characterised in that the microindentations are filled with the solvent by vapour-deposition.

8. Method according to claim 1, characterised in that the microindentations taper with increasing depth.

9. Method according to claim 8, characterised in that the machining of the side of the plastics material semifinished product, which is not provided with microindentations, is continued until the cross-sections of the microindentations have a predetermined size.

## Revendications

1. Procédé d'usinage d'un demi-produit en matière plastique muni sur une face de microcavités qui comprend les étapes de :
a) remplir et recouvrir les microcavités d'une substance durcissable qu'on peut éliminer sélectivement par dissolution,
b) durcir la substance,
c) aplanir la surface de la substance durcie par usinage par enlèvement de copeaux,
d) fixer la surface aplanie sur un dispositif de fixation sous vide,
e) usiner par enlèvement de copeaux la face du demi-produit en matière plastique non munie de microcavités, jusqu'à la mise à nu au moins partielle des microcavités,
f) éliminer sélectivement la substance des microcavités.

2. Procédé selon la revendication 1, caractérisé en ce que le demi-produit en matière plastique est en polyméthacrylate de méthyle (PMMA).

3. Procédé selon la revendication 1 ou 2, caractérisé en ce que la substance durcissable est une colle.

4. Procédé selon la revendication 3, caractérisé en ce qu'on utilise comme colle de la colle de poisson.

5. Procédé selon les revendications 3 ou 4, caractérisé en ce que l'élimination sélective est réalisée par dissolution avec de l'eau.

6. Procédé selon la revendication 1, 2, 3 ou 4, caractérisé en ce que pour remplir et recouvrir les microcavités de substance durcissable, on remplit les microcavités d'un solvant de la substance et ensuite on dépose la substance.

7. Procédé selon la revendication 6, caractérisé en ce qu'on remplit les microcavités par vaporisation avec le solvant.

8. Procédé selon la revendication 1, caractérisé en ce que les microcavités se rétrécissent quand la profondeur augmente.

9. Procédé selon la revendication 8, caractérisé en ce qu'on prolonge l'usinage par enlèvement de copeaux de la face non munie de microcavités du demi-produit en matière plastique jusqu'à ce que les sections transversales des microcavités présentent une taille fixée.
